# EUROPÄISCHE PATENTSCHRIFT

(11) **EP 3 791 715 B1**
(45) Veröffentlichungstag und Bekanntmachung des Hinweises auf die Patenterteilung: **28.06.2023**
(21) Anmeldenummer: 20194972.4
(22) Anmeldetag: 08.09.2020
(51) Int. Cl.: A01M 1/04

(54) **INSEKTENFALLE**
INSECT TRAP
PIÈGE À INSECTES

(30) Priorität: 12.09.2019 AT 2922019
(43) Veröffentlichungstag der Anmeldung: 17.03.2021
(73) Patentinhaber: WITASEK Pflanzenschutz GmbH, 9560 Feldkirchen (Ktn.) (AT)
(72) Erfinder: WITASEK, Peter, 9560 Feldkirchen (AT)
(74) Vertreter: Beer & Partner Patentanwälte KG

(56) Entgegenhaltungen:
- EP-A2- 1 832 167
- WO-A1-2017/015702
- DE-U1-202005 016 561

## Beschreibung

Die Erfindung betrifft eine Insektenfalle, mit der Insekten angelockt und insbesondere gefangen sowie gegebenenfalls getötet werden.

Solche Insektenfallen, die zum Anlocken, Fangen und/oder Töten von Schadinsekten dienen, sind in verschiedenen Ausführungsformen bekannt.

Unter bekannten Insektenfallen sind als Beispiele zu nennen: Schlitzfallen, Borkenkäfer-Schlitzfallen, Trocken- oder Nass-Fallen mit Prallflächen, Segmenttrichterfallen, Fallenlampions, Klebefallen mit dreiseitigem, klebrigem Prisma, Flügelfallen-Klebefallen und Insektenfallen mit pyramidenförmigem Netz. Beispiele für hier in Betracht gezogene Insektenfallen sind aus AT 513 518 B1 bekannt.

Schlitzfallen sind beispielsweise aus DE 195 15 454 A1 und aus EP 1 900 280 A1 bekannt.

Um das Anlocken von Insekten (Schadinsekten) zu verbessern, werden bekannten Insektenfallen häufig Botenstoffe (Semiochemikalien, wie z.B. Pheromone) zugeordnet.

Problematisch ist es, dass Botenstoffe alleine nicht genügen, um Insekten mit bekannten Insektenfallen hinreichend wirksam anzulocken.

Es ist auch bekannt, Schadinsekten nicht nur mit Botenstoffen, sondern auch mit direkten Lichtquellen anzulocken. Dabei werden die Insekten zu einem Fallensystem und/oder einer Insekten tötenden Stelle (z.B. Insektizidnetz) gelockt. Bei einem Fallensystem werden die Insekten in der Insektenfalle gefangen (z.B. Schlitzfallen, Segmenttrichterfallen, Klebefallen, Fallenlampions, Netzfallen, Lichtfallen etc.), wobei bei abtötenden Insektenfallen auch von attract-and-kill-Systemen (z.B. Insektizidnetze und Insektizidfallen) gesprochen wird.

Bekannt ist auch das Anlocken von Insekten, wie z.B. von Borkenkäfern, mit Botenstoffen (Semiochemikalien bzw. Pheromone, Allelochemikalien, Kairomone, Allomone), die auf die Insekten anlockend wirken, ergänzt um eine Einrichtung, die die Lockwirkung auf die Schadinsekten, und damit - je nach Anwendung - den Fang im Fallensystem oder die Wirkung von attract-and-kill-Systemen deutlich erhöht.

Aus M.A. Khanzada et al., "Influence of different Colours on the Effectiveness of Water Pan Traps to capture Insects in Mustard Ecosystem" in International Journal of Biology and Biotechnology 13 (2): 273-277, 2016 ist es bekannt, dass die Farbe von Insektenfallen Einfluss auf die Fangquote hat. Es wurden gelbe, weiße, grüne und schwarze Insektenfallen in Form von mit 5 %-iger, wässeriger Formalinlösung gefüllter Pfannen verwendet.

M. Paraschiv et al., "The Effect of Intercept Trap Color on Ips Typographus Captures" in Bulletin of the Transilvania University of Brasov, Vol. 5 (54) No. 1 - 2012 berichten, dass Ips Typographus (Buchdrucker) von dunklen Insektenfallen, beispielsweise braunen und schwarzen Insektenfallen, besonders angelockt werden, da diese bei Sonneneinstrahlung eine höhere Temperatur haben.

A.S. Packard "Color-Preference in Insects" in Journal of the New York Entomological Society, Vol. 11, No. 3 (Sep., 1903), pp. 132-137 beschreibt, dass Insekten bestimmte Farben bevorzugen.

Es ist beobachtet worden, dass sich Schadinsekten, wie beispielsweise Borkenkäfer (Buchdrucker), meist an der sonnenabgewandten Seite von Wirtspflanzen in diese einbohren. Grund hierfür ist die sehr starke Infrarotstrahlung, die von der warmen, sonnenseitigen Oberfläche der Wirtspflanze ausgeht und die auf Insekten abstoßend wirkt.

Anderseits ist Infrarotstrahlung für Schadinsekten bis zu einem gewissen Ausmaß anziehend, wobei aber eine zu heiße Rindenoberfläche dem Schadinsekt, insbesondere dem Borkenkäfer, signalisiert, dass sich seine Brut hier nicht optimal (zu hohe Temperatur) entwickeln kann.

Um das Anlocken von Schadinsekten, wie beispielsweise den Borkenkäfer, zu verbessern, ist es auch bekannt, Insektenfallen mit einer schwarzen Oberfläche zu versehen. Allerdings hat dies den Nachteil, dass sich die schwarze Oberfläche bei Sonneneinstrahlung erwärmt und die oben erwähnte abstoßende Wirkung auf Schadinsekten, insbesondere den Borkenkäfer, verstärkt auftritt, sodass der gewünschte Schadinsekten anziehende Effekt nur eingeschränkt eintritt.

Aus EP 1 832 167 A2 ist es bekannt, eine Trägerschicht für die Wirkstoffschicht einer Insektenfalle mit Thermochromfarbe mit dem Ziel, dem Anlocken von Insekten zu dienen, zu veredeln. Wie dies erreicht werden soll, ist in EP 1 832 167 A2 nicht geoffenbart.

Aus WO 2017/015702 A1 ist eine Klebefalle mit vier zueinander im rechten Winkel stehenden Flügeln bekannt. Um anzuzeigen, dass das Lockmittel ergänzt werden muss, ändert sich die Farbe des Lockmittels. Die bekannte Klebefalle kann unterschiedlich gefärbt sein, wobei auch Schwarz als geeignete Farbe erwähnt ist.

In WO 2006/121346 A1 ist erwähnt, dass der Körper einer Falle dunkelblau oder schwarz sein kann.

DE 20 2005 06 561 U erwähnt zwar Thermochromfarben, betrifft aber keine Falle, die dem Gegenstand der Erfindung entspricht, sondern bloß einen Fliegenköder. Die Änderung der Farben soll gemäß DE 20 2005 016 561 U1 dazu dienen, verschiedene Farben hervorzurufen. Da von Fliegen ausweislich Absatz [0006] von DE 20 2005 016 561 U1 nicht bekannt ist, welche Farbe sie anlockt, soll ein Spektrum von Farben des Fliegenköders angeboten werden. So sollen Fliegen erfolgreich angelockt werden.

Der Erfindung liegt die Aufgabe zugrunde, die Attraktivität von Insektenfallen - ganz gleich welcher Bauart - zu erhöhen.

Gelöst wird diese Aufgabe mit einer Insektenfalle, die die Merkmale von Anspruch 1 aufweist.

Bevorzugte und vorteilhafte Ausgestaltungen der Erfindung sind Gegenstand der Unteransprüche.

In einer im Rahmen der Erfindung in Betracht gezogenen Ausführungsform trägt die Außenseite der Insektenfalle wenigstens bereichsweise eine thermochrome Beschichtung, die unter einer bestimmten Temperatur schwarz und über der bestimmten Temperatur lichtdurchlässig ist, so dass die Außenseite der Insektenfalle, welche unter der Beschichtung liegt und eine Farbe hat, die für das zu fangende Schadinsekt anlockend ist, wenigstens für das zu fangende Schadinsekt sichtbar ist.

Da bei der erfindungsgemäßen Insektenfalle wenigstens in (ausgewählten) Bereichen ihrer Außenseite oder die ganze Außenseite der Insektenfalle über einer bestimmten Temperatur eine Farbe hat, die für das zu fangende Schadinsekt anlockend ist, weil die Farbe der Farbe einer von dem zu fangenden Schadinsekt bevorzugten Wirtspflanze oder eines bevorzugten Aufenthaltsplatzes entspricht, ergibt sich ein zweifacher, vorteilhafter Effekt. Einmal erwärmt sich die zunächst, also unterhalb der gewählten (bestimmten) Temperatur, wenigstens bereichsweise schwarze Insektenfalle in erwünschter Weise und ist für Schadinsekten anziehend. Über der gewählten Temperatur hat die Insektenfalle eine Farbe, die für das zu fangende Schadinsekt anlockend ist. Weiters erwärmt sich die die Außenseite bildende Wand der Insektenfalle bei Sonneneinstrahlung nicht mehr übermäßig und gibt daher weniger IR-Strahlung ab, da die Wand jetzt eine andere Farbe als schwarz hat und die Farbe das Sonnenlicht stärker reflektiert als die schwarze Außenseite (Wand) der Insektenfalle.

In einer Ausführungsform der Erfindung hat die Außenseite der Insektenfalle eine Farbe, die für das zu fangende Schadinsekt anlockend wirkt. Zusätzlich ist bei dieser Ausführungsform an der Außenseite der Insektenfalle eine Beschichtung vorgesehen, die unter der gewählten, bestimmten Temperatur schwarz und über dieser Temperatur reversibel lichtdurchlässig ist.

Im Vorliegenden wird mit dem Begriff "eine Farbe, die für das Schadinsekt anlockend ist" insbesondere eine Farbe verstanden, die der Farbe einer bevorzugten Wirtspflanze oder eines bevorzugten Aufenthaltsplatzes des zu fangenden Schadinsekts wenigstens weitgehend entspricht, also eine Farbe, die das zu fangende Insekt (gut) sieht und die für das zu fangende Insekt (besonders) anziehend ist.

Da bei der erfindungsgemäßen Insektenfalle in einer Ausführungsform die zunächst schwarze und insbesondere opake Beschichtung über einer bestimmten Temperatur lichtdurchlässig wird, tritt die unerwünschte Erhöhung der Temperatur - und damit die verstärkte Abgabe von Infrarotstrahlung - nicht auf.

Im Rahmen der Erfindung ist beispielsweise vorgesehen, dass die unter der bestimmten Temperatur schwarzen Bereiche der Insektenfalle oder die bereichsweise schwarze Beschichtung der Insektenfalle bei einer Temperatur zwischen 25°C und 40°C, insbesondere bei einer Temperatur zwischen 29°C und 31°C, für Licht, insbesondere für Licht, das von zu fangenden Insekten gesehen wird, durchlässig (durchsichtig, transparent oder durchscheinend) wird und eine Farbe der Insektenfalle sichtbar wird, die auf das Insekt anziehend/anlockend wirkt. Dies wird beispielsweise dadurch erreicht, dass die Insektenfalle unter der schwarzen und über einer bestimmten Temperatur lichtdurchlässigen Beschichtung eine Farbe hat, die auf das Insekt anziehend wirkt. Dies ist beim Borkenkäfer (Buchdrucker) beispielsweise die Farbe (hell-)braun.

Bei der erfindungsgemäßen Insektenfalle tritt der vorteilhafte Effekt ein, dass an normalen Tagen mit mäßigen Temperaturen und mäßiger Sonneneinstrahlung die schwarze Insektenfalle aufgrund ihrer höheren Infrarotabstrahlung eine hohe Attraktivität für Schadinsekten hat, sodass eine hohe Fangrate erzielt wird. Wenn die Temperatur der Oberfläche der Insektenfalle über einen bestimmten Wert, beispielsweise über 31°C, ansteigt, wird die schwarze Beschichtung lichtdurchlässig, so dass nicht nur die hohe Infrarotabstrahlung verringert wird, sondern auch die unter der bisher schwarzen, jetzt lichtdurchlässigen Beschichtung vorhandene Farbe der Insektenfalle sichtbar wird.

Bei der Erfindung ist die Insektenfalle wenigstens teilweise mit einer Beschichtung versehen, die unter einer bestimmten Temperatur schwarz und insbesondere opak und über der bestimmten Temperatur lichtdurchlässig ist. Diese Beschichtung kann beispielsweise ein thermochromer Lack sein.

Bevorzugt ist es, dass die Außenseite der Insektenfalle oder deren Beschichtung unter einer bestimmten Temperatur wieder schwarz und insbesondere opak ist. Die Eigenschaft der Beschichtung, lichtdurchlässig zu werden, ist also reversibel. Die bestimmte Temperatur, über welcher die an der Außenseite der Insektenfalle angebrachte Beschichtung nicht mehr schwarz, sondern lichtdurchlässig ist, wird in Abhängigkeit von dem zu fangenden Schadinsekt gewählt. Diese Temperatur wird abhängig von dem anzulockenden und zu fangenden Schadinsekt gewählt und liegt für gewöhnlich zwischen 25°C und 40°C, insbesondere zwischen 29°C und 31°C. Am Beispiel des Großen Buchdruckers liegt die Temperatur zwischen 29°C und 31°C.

Die Temperatur, über welcher die schwarze Beschichtung lichtdurchlässig ist einerseits, und die Farbe der Insektenfalle unterhalb der schwarzen Beschichtung anderseits, kann so ausgewählt werden, dass die Insektenfalle für eine bestimmte Gattung/Art zu fangender (Schad-)Insekten nicht nur bei niedrigen Temperaturen, sondern auch bei höheren Temperaturen attraktiv bleibt.

### Ein Beispiel hierfür ist:

### Borkenkäfer (Buchdrucker):

Die schwarze Beschichtung ist über einer Temperatur der Wand der Insektenfalle von 31°C lichtdurchlässig.Die unterhalb der schwarzen Beschichtung vorgesehene Farbe der Insektenfalle ist "Hellbraun".

Nachstehend werden Beispiele für Farben, die für Insekten besonders anziehend sind, angeführt:

| | |
|---|---|
| Borkenkäfer: | Hellbraun bis Braun |
| Zünsler: | Blau-Grün |
| Wurzelbohrer: | Gelb-Orange |
| Spanner: | Blau-Grün |
| Hausmotte: | Grün |

Es hat sich gezeigt, dass Insektenfallen, die wenigstens bereichsweise eine solche Farbe haben, wenn sie (wenigstens bereichsweise) eine Temperatur haben, welche über der bestimmten Temperatur liegt, besonders vorteilhaft und zum Fangen des gewünschten Insektes besonders wirksam sind.

Zusammenfassend kann eine Ausführungsform der Erfindung wie folgt beschrieben werden:
Eine Insektenfalle ändert ihre schwarze Farbe in eine vom zu fangenden Schadinsekt bevorzugte Farbe, indem eine zunächst schwarze Beschichtung durchsichtig und die unter der Beschichtung vorgesehene, vom Schadinsekt bevorzugte Farbe sichtbar wird.

## Patentansprüche

1. Insektenfalle, die an ihrer Außenseite wenigstens bereichsweise schwarz ist, **dadurch gekennzeichnet, dass** die Insektenfalle an ihrer Außenseite wenigstens bereichsweise eine schwarze Beschichtung trägt und dass die schwarze Beschichtung über einer bestimmten Temperatur lichtdurchlässig ist.

2. Insektenfalle nach Anspruch 1, **dadurch gekennzeichnet, dass** die Beschichtung der Insektenfalle thermochrome Pigmente enthält.

3. Insektenfalle nach Anspruch 1 oder 2, **dadurch gekennzeichnet, dass** die Insektenfalle unterhalb der schwarzen Beschichtung eine Farbe hat, die der Farbe einer Wirtspflanze oder eines bevorzugten Aufenthaltsplatzes des zu fangenden Schadinsektes wenigstens weitgehend entspricht.

4. Insektenfalle nach einem der Ansprüche 1 bis 3, **dadurch gekennzeichnet, dass** die schwarze Beschichtung über einer Temperatur zwischen 25°C und 40°C, insbesondere über einer Temperatur zwischen 29°C und 31°C, lichtdurchlässig ist.

5. Insektenfalle nach einem der Ansprüche 1 bis 4, **dadurch gekennzeichnet, dass** die schwarze Beschichtung über einer bestimmten Temperatur für eine Wellenlänge des Lichtes, die von dem zu fangenden Insekt gesehen wird, lichtdurchlässig ist.

6. Insektenfalle nach einem der Ansprüche 1 bis 5, **dadurch gekennzeichnet, dass** die schwarze Beschichtung über einer bestimmten Temperatur durchsichtig, transparent oder wenigstens durchscheinend ist.

## Claims

1. Insect trap which is black on its outside at least in certain areas, **characterized in that** the insect trap bears a black coating on its outside at least in certain areas and **in that** the black coating is light-transmissive above a certain temperature.

2. Insect trap according to claim 1, **characterized in that** the coating of the insect trap contains thermochromic pigments.

3. Insect trap according to claim 1 or 2, **characterized in that** the insect trap has a color below the black coating that at least largely corresponds to the color of a host plant or a preferred residence site of the insect pest to be trapped.

4. Insect trap according to one of claims 1 to 3, **characterized in that** the black coating is light-transmissive above a temperature between 25°C and 40°C, in particular above a temperature between 29°C and 31°C.

5. Insect trap according to one of claims 1 to 4, **characterized in that** the black coating is light-transmissive above a certain temperature for a wavelength of light seen by the insect to be trapped.

6. Insect trap according to one of claims 1 to 5, **characterized in that** the black coating is diaphanous, transparent or at least translucent above a certain temperature.

## Revendications

1. Piège à insectes qui est noir au moins dans certaines zones sur sa face extérieure, **caractérisé en ce que** le piège à insectes porte un revêtement noir au moins dans certaines zones sur sa face extérieure et **en ce que** le revêtement noir est translucide au-dessus d'une certaine température.

2. Piège à insectes selon la revendication 1, **caractérisé en ce que** le revêtement du piège à insectes contient des pigments thermochromiques.

3. Piège à insectes selon la revendication 1 ou 2, **caractérisé en ce que** le piège à insectes a, sous le revêtement noir, une couleur qui correspond au moins en grande partie à la couleur d'une plante hôte ou d'un lieu de séjour préféré de l'insecte nuisible à capturer.

4. Piège à insectes selon l'une des revendications 1 à 3, **caractérisé en ce que** le revêtement noir est translucide au-dessus d'une température comprise entre 25 °C et 40 °C, en particulier au-dessus d'une température comprise entre 29 °C et 31 °C.

5. Piège à insectes selon l'une des revendications 1 à 4, **caractérisé en ce que** le revêtement noir est translucide au-dessus d'une certaine température pour une longueur d'onde de la lumière vue par l'insecte à capturer.

6. Piège à insectes selon l'une des revendications 1 à 5, **caractérisé en ce que** le revêtement noir est transparent, translucide ou au moins diaphane au-dessus d'une certaine température.
